# EUROPEAN PATENT SPECIFICATION

(11) **EP 4 170 980 B1**
(45) Date of publication and mention of the grant of the patent: **25.03.2026**
(21) Application number: 20943639.3
(22) Date of filing: 30.06.2020
(51) Int. Cl.: H04L 12/40

(54) **COMMUNICATION METHOD AND RELATED APPARATUS**
KOMMUNIKATIONSVERFAHREN UND ZUGEHÖRIGE VORRICHTUNG
PROCÉDÉ DE COMMUNICATION ET APPAREIL ASSOCIÉ

(43) Date of publication of application: 26.04.2023
(73) Proprietor: Huawei Technologies Co., Ltd., Longgang District, Shenzhen, Guangdong 518129 (CN)
(72) Inventor: LAM, Wan, Shenzhen, Guangdong 518129 (CN); ZHANG, Ke, Shenzhen, Guangdong 518129 (CN)
(74) Representative: Gill Jennings & Every LLP
(86) International application number: PCT/CN2020/099134
(87) International publication number: WO 2022/000234

(56) References cited:
- EP-A1- 3 661 133
- WO-A1-2018/196969
- CN-A- 101 282 230
- CN-A- 110 505 155
- US-A1- 2008 003 998
- US-A1- 2019 082 474

## Description

### TECHNICAL FIELD

This application relates to the communication field, and in particular, to a communication method and a related device.

### BACKGROUND

In a switching network system, a line card chassis (Line Card Chassis, LCC) is usually formed by at least one line card (Line Card, LC) and at least one fabric card (Fabric Card, FC). In the LCC, each LC includes at least one fabric interface chip (Fabric Interface chip, FIC), and each FC includes at least one switch element (Switch Element, SE).

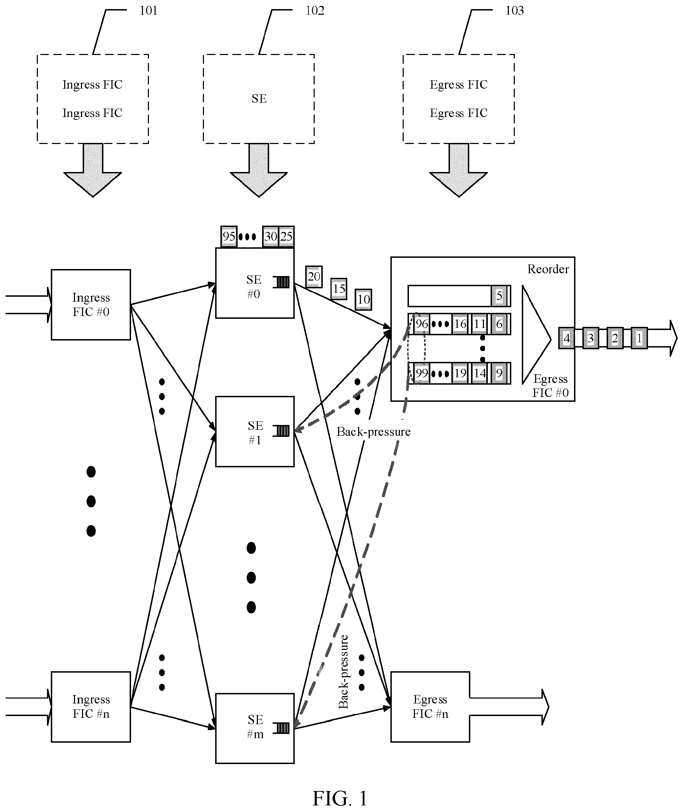

In a conventional technology, a plurality of FICs in the switching network system may be interconnected to a plurality of SEs to communicate with each other. A single-level single-chassis networking scenario is used as an example. As shown in FIG. 1, at least one ingress FIC (Ingress FIC) 101, at least one SE 102, and at least one egress FIC (Egress FIC) 103 are included. After a packet is split on a side of the ingress FIC 101 to obtain cells, the cells are distributed to a plurality of SEs 102, and then are output by the plurality of SEs 102 to the egress FIC 103.

In a communication process in which the plurality of SEs 102 output the cells to the egress FIC 103, because instantaneous congestion degrees of output queues (Output Queue, OQ) of the SEs are different, delays for the cells to arrive at the egress FIC through different SEs are also different. In this case, the egress FIC needs to reserve an input queue (Input Queue, IQ) buffer (Buffer) to eliminate a delay difference of the paths, to finally complete sorting and packet assembly. Then, the egress FIC sends out the cells. In the current switching network system, IQ resources used by the egress FIC for sorting are limited. If a traffic burst in the network is large or the ingress FIC performs unbalanced distribution instantaneously, the IQ resources of the egress FIC are easily exhausted. In this case, the egress FIC can only passively back-pressure a corresponding SE.

However, when the egress FIC back-pressures the SE (for example, the FIC sends a back pressure indication to the SE), due to time consumption of a back pressure transfer process of the egress FIC and high round-trip time (Round-Trip Time, RTT) consumption for the SE to respond, transmission delays of the cells in the switching network system greatly increase. This easily leads to a high performance risk in the current switching network system.

US 2008/003998 A1 discloses a method and apparatus for improving network performance in a communication system. A system is disclosed that incorporates a network management system (NMS) that manages operations of a communication system including a mobile telephone switching office (MTSO) coupled to a plurality of wireless base terminals (WBTs) by way of a corresponding plurality of network elements, having a network configuration element that identifies for each of the plurality of WBTs a resultant communication path to the MTSO according to a plurality of performance characteristics calculated from alternative communication paths connecting combinations of the WBTs to the MTSO.

### SUMMARY

The invention is defined in independent claim 1 (method), and in independent claim 8 (apparatus). Dependent claims 2-7 and 9-14 define further implementation details of the invention. Embodiments of this application provide a communication method and a related device, so that an upper-level node in a switching network system shares sorting load of a lower-level node, to avoid an increased transmission delay caused by back pressure of the lower-level node, optimize sorting resources between different levels of nodes in the switching network system, and improve stability of the switching network system.

A first aspect of the embodiments of this application provides a communication method according to appended claim 1. In other words, the first node delays, by using the sending delay threshold, sending the target cell, so that an upper-level node in the switching network system shares sorting load of a lower-level node, to avoid an increased transmission delay caused by back pressure of the lower-level node, optimize sorting resources between different levels of nodes in the switching network system, and improve stability of the switching network system.

In a possible implementation of the first aspect of the embodiments of this application, when the first node is not an initial node in the switching network system, a process in which the first node determines the sending delay threshold of the target cell may include: The first node obtains a quantity of hops between the first node and the initial node in the switching network system. Thereafter, the first node determines the sending delay threshold based on the quantity of hops, where a size of the quantity of hops is positively correlated with a size of the sending delay threshold.

In this embodiment, the first node is not the initial node in the switching network system. The first node can determine the sending delay threshold of the target cell based on the quantity of hops between the first node and the initial node in the switching network system, where the size of the quantity of hops is positively correlated with the size of the sending delay threshold. That is, a larger quantity of hops between the first node and the initial node indicates a larger sending delay threshold of the target cell, and a smaller quantity of hops between the first node and the initial node indicates a smaller sending delay threshold of the target cell. In other words, in the multi-level switching network system, the first node can determine different corresponding sending delay thresholds based on different quantities of hops in cell transmission between the first node and the initial node. This provides a specific implementation of determining the sending delay threshold by the first node, to improve implementability of the solution, thereby improving implementation flexibility the solution.

In a possible implementation of the first aspect of the embodiments of this application, a process in which the first node determines the sending delay threshold of the target cell may include: The first node obtains a transmission delay between the first node and the lower-level node. Thereafter, the first node determines the sending delay threshold based on the transmission delay, where a size of the transmission delay is positively correlated with a size of the sending delay threshold.

In this embodiment, the first node can determine the sending delay threshold of the target cell based on the transmission delay between the first node and the lower-level node, where the size of the transmission delay is positively correlated with the size of the sending delay threshold. That is, a larger transmission delay between the first node and the lower-level node indicates a larger sending delay threshold of the target cell, and a smaller transmission delay between the first node and the lower-level node indicates a smaller sending delay threshold of the target cell. In other words, when the first node has a plurality of lower-level nodes, the first node can determine different corresponding sending delay thresholds based on different transmission delays between the first node and different lower-level nodes. This provides a specific implementation of determining the sending delay threshold by the first node, to improve implementability of the solution, thereby improving implementation flexibility the solution.

In a possible implementation of the first aspect of the embodiments of this application, a process in which the first node determines the sending delay threshold of the target cell may include: The first node receives first congestion feedback information from the lower-level node, where the first congestion feedback information is used to indicate a first congestion degree of the lower-level node. Thereafter, the first node determines the sending delay threshold based on the first congestion degree, where a magnitude of the first congestion degree is positively correlated with a size of the sending delay threshold.

In this embodiment, the first node can determine the sending delay threshold of the target cell based on the first congestion degree indicated by the first congestion feedback information from the lower-level node, where the magnitude of the first congestion degree is positively correlated with the size of the sending delay threshold. That is, a higher first congestion degree of the lower-level node indicates a larger sending delay threshold of the target cell and a lower first congestion degree of the lower-level node indicates a smaller sending delay threshold of the target cell. In other words, the first node can determine a corresponding sending delay threshold based on a congestion degree fed back by the lower-level node. This provides a specific implementation of determining the sending delay threshold by the first node, to improve implementability of the solution, thereby improving implementation flexibility the solution.

In a possible implementation of the first aspect of the embodiments of this application, after the first node determines a sending delay threshold of the target cell, the method may further include: The first node receives second congestion feedback information from the lower-level node, where the second congestion feedback information is used to indicate a second congestion degree of the lower-level node. Thereafter, the first node updates the sending delay threshold based on the second congestion degree to obtain an updated sending delay threshold, where a magnitude of the second congestion degree is positively correlated with a size of the sending delay threshold. In addition, that the first node sends the target cell to a lower-level node when a difference between the system moment and the target moment is greater than the sending delay threshold includes: The first node sends the target cell to the lower-level node when the difference between the system moment and the target moment is greater than the updated sending delay threshold.

In this embodiment, after determining the sending delay threshold of the target cell, the first node may update, based on the second congestion degree reflected by the second congestion feedback information from the lower-level node, the sending delay threshold to obtain the updated sending delay threshold. The second congestion feedback information may be specifically used to feed back a congestion degree of the lower-level node in real time. Correspondingly, the first node sends the target cell to the lower-level node only when the difference between the system moment and the target moment is greater than the updated sending delay threshold. In other words, the first node can dynamically update the sending delay threshold based on the congestion degree fed back by the lower-level node in real time, so that the first node more precisely shares the sorting load of the lower-level node, to further optimize the sorting resources between different levels of nodes in the switching network system, and further improve stability of the switching network system.

In a possible implementation of the first aspect of the embodiments of this application, a process in which the first node obtains the to-be-sent target cell and the target moment may include: The first node obtains a to-be-sent packet. Then, the first node splits the to-be-sent packet to obtain the target cell, where the target moment is used to indicate a generation moment of the target cell in the first node.

In this embodiment, the first node may be the initial node in the switching network system. In this case, after obtaining the to-be-sent packet, the first node may split the to-be-sent packet to obtain the target cell. In addition, the target moment may indicate a moment at which the first node splits the to-be-sent packet, namely, the generation moment of the target cell in the first node. This provides a specific implementation of obtaining the to-be-sent target cell and the target moment by the first node, to improve implementability of the solution, thereby improving implementation flexibility the solution.

In a possible implementation of the first aspect of the embodiments of this application, that the first node obtains a to-be-sent target cell and a target moment includes: The first node receives the target cell and the target moment that are sent by an upper-level node, where the target moment is used to indicate a moment at which the upper-level node receives the target cell, or the target moment is used to indicate a moment at which the upper-level node sends the target cell, or the target moment is used to indicate a moment at which the initial node in the switching network system generates the target cell, or the target moment is used to indicate a moment at which the initial node in the switching network system sends the target cell.

In this embodiment, the first node may be an intermediate node in the switching network system, that is, the first node has an upper-level node. In this case, the first node may receive the target cell and the target moment that are sent by the upper-level node, to obtain the target cell and the target moment. In addition, the target moment may be used to indicate the moment at which the upper-level node receives the target cell, or the target moment may be used to indicate the moment at which the upper-level node sends the target cell, or the target moment may be used to indicate the moment at which the initial node in the switching network system generates the target cell, or the target moment may be used to indicate the moment at which the initial node in the switching network system sends the target cell. This provides a specific implementation of obtaining the to-be-sent target cell and the target moment by the first node, and correspondingly provides a plurality of implementations of the target moment, to improve implementability of the solution, thereby improving implementation flexibility the solution.

In a possible implementation of the first aspect of the embodiments of this application, that the first node sends the target cell to a lower-level node includes: The first node sends the target cell and the target moment to the lower-level node.

In this embodiment, in a process in which the first node sends the target cell to the lower-level node, specifically, the first node may further send the target moment to the lower-level node, so that the lower-level node can further process the target cell based on a corresponding sending delay threshold, and the lower-level node delays sending the target cell to a further lower-level node, to further optimize sorting resources between different levels of nodes in the switching network system, and further improve stability of the switching network system.

In a possible implementation of the first aspect of the embodiments of this application, that the first node sends the target cell and the target moment to the lower-level node includes: The first node updates the target moment by using the system moment to obtain an updated target moment. Thereafter, the first node sends the target cell and the updated target moment to the lower-level node.

In this embodiment, the first node may update the target moment by using the system moment, and then send the target cell and the updated target moment to the lower-level node after obtaining the updated target moment. To be specific, that the target moment is a moment at which the first node sends the target cell is indicated to the lower-level node. This implements a specific implementation in which the lower-level node delays sending the target cell to a further lower-level node, to improve implementability of the solution, thereby improving implementation flexibility the solution.

In a possible implementation of the first aspect of the embodiments of this application, the first node is a fabric interface chip FIC or a switching element SE, and the lower-level node is an FIC or an SE.

In this embodiment, the switching network system may be a single-level single-chassis system, or may be a multi-level multi-chassis system. The lower-level node is an upper-level node of the first node, that is, the first node may be an FIC or an SE. Correspondingly, the lower-level node may also be an FIC or an SE, so that this solution can be applied to a plurality of scenarios flexibly arranged in the switching network system, to support a more flexible networking structure.

A second aspect of the embodiments of this application provides a communication apparatus according to appended claim 8. In a process in which the first node sends the target cell to the lower-level node in the switching network system, the sending unit sends the target cell to the lower-level node when the difference between the system moment and the target moment is greater than the sending delay threshold. In other words, the sending unit delays, by using the sending delay threshold, sending the target cell, so that an upper-level node in the switching network system shares sorting load of the lower-level node, to avoid an increased transmission delay caused by back pressure of the lower-level node, optimize sorting resources between different levels of nodes in the switching network system, and improve stability of the switching network system.

In the second aspect of the embodiments of this application, the compositional module of the communication apparatus may be further configured to perform the steps performed in the possible implementations of the first aspect. For details, refer to the first aspect. Details are not described herein.

A seventh aspect of the embodiments of this application provides a chip system, and the chip system includes a processor, configured to support an access network device in implementing a function according to any one of the first aspect or the possible implementations of the first aspect. In a possible design, the chip system may further include a memory and the memory is configured to store program instructions and data that are necessary for the access network device. The chip system may include a chip, or may include a chip and another discrete component.

An eighth aspect of the embodiments of this application provides a communication system, and the communication system includes the communication apparatus according to the first aspect and the computer program product according to the sixth aspect.

For technical effects brought by any one of the second aspect to the eighth aspect, or any possible implementation thereof, refer to the technical effects brought by the first aspect or the different possible implementations of the first aspect. Details are not described herein.

It can be learned from the foregoing technical solutions that the embodiments of this application have the following advantages: In the communication process of the switching network system, the first node in the switching network system obtains the to-be-sent target cell and the target moment, where the target moment is used to indicate the moment at which the target cell is processed. Then, the first node determines the sending delay threshold of the target cell. In addition, the first node obtains the current system moment in the first node. Thereafter, the first node sends the target cell to the lower-level node when the difference between the system moment and the target moment is greater than the sending delay threshold. The first node obtains the target cell and the target moment. In a process in which the first node sends the target cell to the lower-level node in the switching network system, the first node sends the target cell to the lower-level node only when the difference between the system moment and the target moment is greater than the sending delay threshold. In other words, the first node delays, by using the sending delay threshold, sending the target cell, so that an upper-level node in the switching network system shares sorting load of a lower-level node, to avoid an increased transmission delay caused by back pressure of the lower-level node, optimize sorting resources between different levels of nodes in the switching network system, and improve stability of the switching network system.

### BRIEF DESCRIPTION OF DRAWINGS

FIG. 1 is a schematic diagram of an application scenario in which embodiments of this application find utility;
FIG. 2 is a schematic diagram of an embodiment of a communication method according to an embodiment of this application;
FIG. 3 is another schematic diagram of an embodiment of a communication method according to an embodiment of this application;
FIG. 4 is another schematic diagram of an embodiment of a communication method according to an embodiment of this application;
FIG. 5 is another schematic diagram of an embodiment of a communication method according to an embodiment of this application;
FIG. 6 is a schematic diagram of an embodiment of a communication apparatus according to an embodiment of this application; and
FIG. 7 is another schematic diagram of an embodiment of a communication apparatus according to an embodiment of this application.

### DESCRIPTION OF EMBODIMENTS

The following clearly and completely describes the technical solutions in embodiments of this application with reference to the accompanying drawings in embodiments of this application.

With reference to FIG. 1, a plurality of FICs in a switching network system may be interconnected to a plurality of SEs to communicate with each other. A single-level single-chassis networking scenario is used as an example. The switching network system includes at least one ingress FIC 101, at least one SE 102, and at least one egress FIC 103.

After a packet is split on a side of the ingress FIC 101 to obtain cells, the cells are distributed to a plurality of SEs 102, and then are output by the plurality of SEs 102 to the egress FIC 103. Specifically, in a communication process in which the plurality of SEs 102 output the cells to the egress FIC 103, because instantaneous congestion degrees of OQs of the SEs are different, delays for the cells to arrive at the egress FIC through different SEs are also different. In this case, the egress FIC needs to reserve an IQ buffer to eliminate a delay difference of the paths, to finally complete sorting and packet assembly. Then, the egress FIC sends out the cells. In the current switching network system, IQ resources used by the egress FIC for sorting are limited. If a traffic burst in the network is large or the ingress FIC performs unbalanced distribution instantaneously, the IQ resources of the egress FIC are easily exhausted. In this case, the egress FIC can only passively back-pressure a corresponding SE.

For example, in this back pressure process, the SE may set a plurality of OQs based on different output links and/or different priority types, and the egress FIC may set an IQ based on a receiving link and a service type. When the IQ of the egress FIC is congested, reverse back pressure is triggered and is transferred to the SE by being carried in a cell header, and the OQ of the SE responds to the corresponding back pressure.

However, as shown in FIG. 1, when the egress FIC back-pressures the SE, due to time consumption of a back pressure transfer process of the egress FIC and high RTT consumption for the SE to respond, transmission delays of the cells in the switching network system greatly increase. For the egress FIC, when a data packet sent by an upper-level node (the SE) of the egress FIC has a large output delay difference, sorting resources of the egress FIC are easily exhausted. This easily leads to a high performance risk in the current switching network system.

Similarly, when the switching network system is applied to a single-level multi-chassis networking scenario, a multi-level single-chassis networking scenario, or a multi-level multi-chassis networking scenario, an initial node (that is, an input node) and a terminating node (that is, an output node) of the switching network system are usually FICs, and an intermediate node that exists between the initial node and the terminating node may be an FIC or an SE. In this case, for any upper-level node in the switching network system, when the upper-level node sends data to a lower-level node, back pressure may occur due to insufficient sorting resources of the lower-level node. As back pressure greatly increases a transmission delay of a cell in the switching network system, a high performance risk of the current switching network system easily occurs, affecting stability of data transmission in the switching network system.

To resolve the foregoing problem, embodiments of this application provide a communication method and a related device, so that an upper-level node in the switching network system shares sorting load of a lower-level node, to avoid an increased transmission delay caused by back pressure of the lower-level node, optimize sorting resources between different levels of nodes in the switching network system, and improve stability of the switching network system.

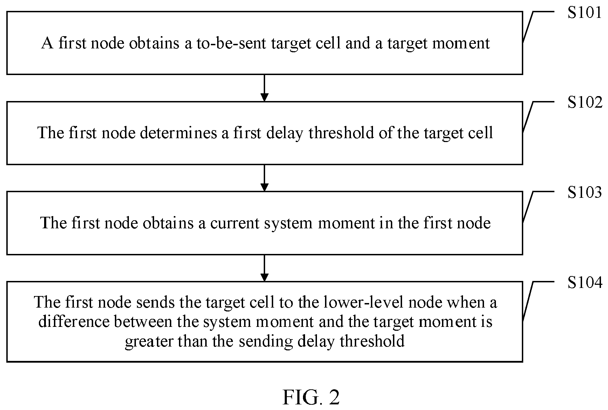

With reference to FIG. 2, an embodiment of this application provides a communication method, including the following steps.

S101: A first node obtains a to-be-sent target cell and a target moment.

In this embodiment, the first node obtains the to-be-sent target cell and the target moment, where the target moment is used to indicate a moment at which the target cell is processed.

In a switching network system, there is a plurality of levels of nodes, and nodes at each level include a plurality of FICs or a plurality of SEs. The first node is any upper-level node (namely, an FIC or an SE) in the switching network system, that is, the first node has a lower-level node in the switching network system. Specifically, in this embodiment, sorting load of the lower-level node may be released by using the upper-level node in a plurality of application scenarios. Supported scenarios include: a single-level single-chassis scenario, a CLOS multi-level multi-chassis scenario, a two-chassis back-to-back scenario, a mesh multi-chassis scenario, and the like, and a scenario in which a distance between an FIC and an SE or between SEs is different, or an application scenario of another switching network system. This is not specifically limited herein.

In a specific implementation, in step S101, the target cell obtained by the first node may include a cell, and the target moment may be carried in cell header information of the target cell. Alternatively, in step S101, the first node may obtain two independent information blocks, which are respectively used to carry the target moment and the target cell. An information block in which the target moment is located may carry an identifier of the target cell, and an information block in which the target cell is located may carry an identifier of the target moment. Alternatively, in step S101, the first node obtains the target moment and the target cell in another manner. This is not limited herein.

In a specific implementation, the first node has a lower-level node in the switching network system, that is, the first node is not a terminating node in the switching network system. In other words, the first node may be specifically an initial node or an intermediate node in the switching network system. Details are as follows.
(1) When the first node is the initial node of the switching network system, in step S101, a process in which the first node obtains the to-be-sent target cell and the target moment may include: The first node obtains the to-be-sent packet. Then, the first node splits the to-be-sent packet to obtain the target cell, where the target moment is used to indicate a generation moment of the target cell in the first node. In the process of obtaining the target cell and the target moment, the first node may obtain the target cell by splitting the received to-be-sent packet.

In a specific implementation, local clocks may be synchronized between a plurality of levels of nodes (an SE and an FIC) in the switching network system. In this case, the first node serves as the initial node in the switching network system. When the target cell is obtained by splitting the to-be-sent packet, a moment at which the first node splits the to-be-sent packet may be read from the local clock, and determined as the target moment. That is, the generation moment of the target cell in the first node is used as the target moment. For example, synchronization of local clocks may be implemented between the plurality of levels of nodes in the switching network system by aligning with a global time stamp (Global Time Stamp, GTS) based on a global time stamp synchronization mechanism. In this case, when splitting the to-be-sent packet to obtain the target cell, the first node may label each cell with a global time stamp. That is, the moment at which the first node splits the to-be-sent packet to obtain the target cell is correspondingly used as the target moment. In addition, when the initial node includes a plurality of FICs (for example, the plurality of ingress FICs in FIG. 1), one global time stamp counter may be maintained between the plurality of different initial nodes. The plurality of ingress FICs mutually transfer time stamp synchronization cells carrying respective time stamp values, and the time stamp values are globally aligned with a time stamp with a minimum FIC number, to unify and synchronize global time stamps between the plurality of different initial nodes.

In addition, in another implementation, when a data volume of the to-be-sent packet is small or the first node has only one lower-level node, in step S101, the first node may use the to-be-sent packet as the target cell, and use a moment at which the first node obtains the to-be-sent packet as the target moment.

(2) When the first node is not the initial node of the switching network system, in step S101, a process in which the first node obtains the to-be-sent target cell and the target moment may include: The first node receives the target cell and the target moment from the upper-level node, to obtain the target cell and the target moment. In other words, when the first node is an intermediate node in the switching network system, the first node may specifically receive the target cell and the target moment that are sent by the upper-level node, to obtain the target cell and the target moment.

In a specific implementation, the first node may be an intermediate node in the switching network system, that is, the first node has an upper-level node. In this case, the first node may receive the target cell and the target moment that are sent by the upper-level node, to obtain the target cell and the target moment. In this case, there are a plurality of implementations of the target moment, including any one of the following:
a. The target moment may be used to indicate a moment at which the upper-level node receives the target cell. To be specific, when the upper-level node receives the target cell sent by a further upper-level node, the upper-level node uses a receiving moment of the target cell as the target moment, and sends the target moment to the first node. In this case, in a multi-level transmission process in the switching network system, the target moment of the target cell may change.
b. The target moment may be used to indicate a moment at which the upper-level node sends the target cell. To be specific, after the upper-level node receives the target cell sent by a further upper-level node, when the upper-level node sends the target cell, the upper-level node uses a sending moment of the target cell as the target moment and sends the target moment to the first node. In this case, in a multi-level transmission process in the switching network system, the target moment of the target cell may change.
c. The target moment may be used to indicate a moment at which the initial node in the switching network system generates the target cell. To be specific, the switching network system uses the generation moment of the target cell as the target moment. In addition, in a multi-level transmission process in the switching network system, the target moment of the target cell keeps unchanged.
d. The target moment may be used to indicate a moment at which the initial node in the switching network system sends the target cell. To be specific, the switching network system uses a sending moment of the target cell as the target moment. In addition, in a multi-level transmission process in the switching network system, the target moment of the target cell keeps unchanged.

Therefore, the target moment may be implemented in a plurality of manners, thereby improving implementation flexibility of the solution. In addition, in the switching network system, the initial node usually carries corresponding routing and forwarding information in each cell that is obtained by splitting the packet. The routing and forwarding information may indicate to route a plurality of cells that are obtained by splitting a same packet to a same terminating node. Subsequently, the terminating node may restore the plurality of cells to the original packet for output. Therefore, for the plurality of implementation processes of the target moment, in comparison with the process in which the target moment changes in the implementations a and b, the implementations c and d are preferred. That is, when the initial node splits the to-be-sent packet to obtain the target cell, a splitting moment or a sending moment from the initial node is determined as the target moment. In addition, in the multi-level transmission process in the switching network system, the target moment of the target cell keeps unchanged. Therefore, it can be ensured, as much as possible, that the cells from the same to-be-sent packet are subsequently restored by the terminating node to the original packet within a short delay.

In the switching network system, when the method is applied to the single-level single-chassis scenario, as shown in FIG. 1, the SE 102 is a lower-level node of the ingress FIC 101, and the egress FIC 103 is a lower-level node of the SE 102. In addition, the ingress FIC 101 is an upper-level node of the SE 102, and the SE 102 is an upper-level of the egress FIC 103. When the method is applied to a multi-level node scenario (for example, the CLOS multi-level multi-chassis scenario, the two-chassis back-to-back scenario, or the mesh multi-chassis scenario), one-hop transmission, two-hop transmission, or more-hop transmission may be performed between different levels of nodes. In this case, an upper-level node and a lower-level node may be nodes of two adjacent levels, or may be nodes of two levels at different hops.

S102: The first node determines a sending delay threshold of the target cell.

In this embodiment, in step S102, the first node may determine the sending delay threshold corresponding to the target cell obtained in step S101.

In a specific implementation, the first node may determine the sending delay threshold (TS_TX_THD) of the target cell in step S102 based on one or more of the following conditions. The first node may determine corresponding sending delay thresholds according to different configuration rules:
(1) The first node obtains a quantity of hops between the first node and the initial node in the switching network system. Thereafter, the first node determines the sending delay threshold based on the quantity of hops, where a size of the quantity of hops is positively correlated with a size of the sending delay threshold.

Specifically, the first node may set sending delay thresholds of different target cells based on different links between the first node and the initial node in the switching network system. The size of the quantity of hops is positively correlated with the size of the sending delay threshold. That is, a larger quantity of hops between the first node and the initial node indicates a larger sending delay threshold of the target cell, and a smaller quantity of hops between the first node and the initial node indicates a smaller sending delay threshold of the target cell. For example, the sending delay threshold may be specifically determined by multiplying the quantity of hops by each hop delay, or may be determined by using another mathematical relationship between the quantity of hops and each hop delay. This is not limited herein. Each hop delay may be preconfigured in the first node, or may be carried in the target cell in step S101. Alternatively, each hop delay may be obtained by the first node in another manner. This is not limited herein.

In addition, if the method is applied to the single-level single-chassis scenario, TS_TX_THD may be configured by default as an average delay for passing through one level of node (one level of FIC or SE) in the switching network system. That is, TS_TX_THD equal to HopDelay is configured for a link whose quantity of hops between the first node and the initial node in the switching network system is 1. HopDelay is a delay in the switching network system for passing through one level of node, or a delay in the switching network system that is defined by a user for passing through one level of node, or a delay defined in another manner. This is not limited herein. Further, if the method is applied to the multi-level node scenario (for example, the CLOS multi-level multi-chassis scenario, the two-chassis back-to-back scenario, or the mesh multi-chassis scenario), when the quantity of hops between the first node and the initial node in the switching network system is n (n is an integer greater than 0), a corresponding sending delay threshold may be set based on a different quantity of hops. To be specific, for a link whose quantity of hops between the first node and the initial node in the switching network system is n, configuration is performed to obtain the sending delay threshold by multiplying the quantity n of hops by an average delay time, that is, TS_TX_THD is equal to n×HopDelay.

(2) The first node obtains a transmission delay between the first node and the lower-level node. Thereafter, the first node determines the sending delay threshold based on the transmission delay, where a size of the transmission delay is positively correlated with a size of the sending delay threshold.

Specifically, for the first node, the first node may have a plurality of lower-level nodes in the switching network system. The first node may learn of a transmission delay between the first node and each of the plurality of lower-level nodes in advance, and then set different threshold values based on different transmission delays. To be specific, the first node may determine the delay as the sending delay threshold, or the first node may determine a product obtained by multiplying the delay by a preset coefficient as the sending delay threshold, where the preset coefficient may be preconfigured in the first node or carried in the target cell in step S101, or the first node determines the sending delay threshold in another manner based on the delay. This is not limited herein.

If there is a transmission delay between one level of node and each of a plurality of lower-level nodes in the switching network system, when there are different transmission delays corresponding to different lower-level nodes, different TS_TX_THD may be configured based on different links, to compensate for a path delay on an output side in advance. The different transmission delays between the first node and the plurality of lower-level nodes may indicate different transmission distances between the first node and the lower-level nodes, or may indicate different materials of transmission optical fibers between the first node and the lower-level nodes, or may indicate different transmission parameters between the first node and the lower-level nodes. This is not limited herein.

For example, herein, the transmission distances between the first node and the lower-level nodes are different. When the first node has a plurality of lower-level nodes in the switching network system, different sending delay thresholds may be set in the first node based on different transmission distances between the first node and the plurality of lower-level nodes in combination with a preset coefficient, where a value of the transmission distance may be positively correlated with the size of the sending delay threshold. For example, when the preset coefficient is 0.5 milliseconds per meter, if the transmission distance is 10 meters, it is determined that the sending delay threshold is 5 milliseconds. Thereafter, the sending delay threshold increases by 0.5 ms for one-meter increase in the transmission distance. Alternatively, when the preset coefficient is 20 milliseconds per kilometer, if the transmission distance is 10 kilometers, it is determined that the sending delay threshold is 200 milliseconds. Thereafter, the sending delay threshold increases by 20 ms for one-kilometer increase in the transmission distance. Alternatively, the sending delay threshold is correspondingly set with reference to an actual application scenario. This is not specifically limited herein.

In addition, when the method is applied to the single-level single-chassis scenario, as shown in FIG. 1, the SE 102 is a lower-level node of the ingress FIC 101, and the egress FIC 103 is a lower-level node of the SE 102. When the method is applied to the multi-level node scenario (for example, the CLOS multi-level multi-chassis scenario, the two-chassis back-to-back scenario, or the mesh multi-chassis scenario), one-hop transmission, two-hop transmission, or more-hop transmission may be performed between different levels of nodes. In this case, an upper-level node and a lower-level node may be nodes of two adjacent levels, or may be nodes of two levels at different hops.

(3) The first node receives first congestion feedback information from the lower-level node, where the first congestion feedback information is used to indicate a first congestion degree of the lower-level node. Thereafter, the first node determines the sending delay threshold based on the first congestion degree, where a magnitude of the first congestion degree is positively correlated with a size of the sending delay threshold.

Specifically, the first node may dynamically set the sending delay threshold based on congestion feedback of the lower-level node. The first congestion feedback information may indicate a data volume of a currently-processed cell of the lower-level node, a quantity of currently-processed cells, or a rate of a currently-processed cell, or is another parameter used to indicate a congestion degree of the lower-level node. This is not limited herein. The first node may correspondingly set the sending delay threshold according to a preset sending delay threshold setting rule based on the first congestion feedback information. For example, the first congestion feedback information is the rate of a currently-processed cell of the lower-level node. A higher rate of a currently-processed cell of the lower-level node indicates a lower congestion degree of the lower-level node, and correspondingly, the sending delay threshold determined by the first node is smaller. A lower rate of a currently-processed cell of the lower-level node indicates a higher congestion degree of the lower-level node, and correspondingly, the sending delay threshold determined by the first node is larger. In step S102, the first node may determine the sending delay threshold by using a preset mapping relationship table. Herein, that the first congestion feedback information is the rate of a currently-processed cell of the lower-level node is still used as an example. The mapping relationship table may indicate a mapping relationship between a rate of each currently-processed cell and a sending delay threshold (for example, in the mapping relationship table, a value of the rate is 0/1/2/3/4/.../n, and the corresponding sending delay threshold is a1/a2/a3/a4/.../an, where n is a positive integer, and a1/a2/a3/a4/.../an are preset values); or may indicate a function relationship between a rate of a currently-processed cell and a sending delay threshold (for example, in the mapping relationship table, the sending delay threshold is equal to a product obtained by multiplying the rate by a coefficient b, where the coefficient b is a preset value); or may be another implementation. This is not limited herein.

Therefore, in step S102, the first node may determine the sending delay threshold of the target cell based on a different link between the first node and the initial node in the switching network system, a different link between the first node and the lower-level node, or the feedback information of the lower-level node. A plurality of implementations of determining the sending delay threshold by the first node are provided, to improve implementability of the solution, thereby improving implementation flexibility of the solution.

S103: The first node obtains a current system moment in the first node.

In this embodiment, before step S104, the first node may first obtain the current system moment in the first node.

Specifically, in the plurality of levels of nodes (the SEs and the FICs) in the switching network system, nodes at a same level may include a plurality of SEs or FICs, and an aligned global time stamp may be set for the nodes at the same level. For a specific implementation process, refer to the implementation of unifying the global time stamp between the plurality of different initial nodes. Details are not described herein.

Thereafter, the first node may use the current global time stamp as the current system moment of the first node. Alternatively, the first node may use a global time stamp sent by another node in the nodes at the same level as the current system moment of the first node, or may obtain the current system moment in another manner. This is not limited herein.

S104: The first node sends the target cell to the lower-level node when a difference between the system moment and the target moment is greater than the sending delay threshold.

In this embodiment, when the difference between the system moment obtained in step S103 and the target moment obtained in step S101 is greater than the sending delay threshold determined in step S102, the first node sends the target cell in step S101 to the lower-level node.

In a specific implementation, a process in which the first node sends the target cell to the lower-level node in step S104 may include: The first node sends the target cell and the target moment to the lower-level node, in other words, the lower-level node may obtain the target cell and the target moment based on step S104; and may further process the target cell based on a corresponding sending delay threshold (which is obtained based on a similar determining process in step S102) determined in the lower-level node, so that the lower-level node delays sending the target cell to a further lower-level node, to further optimize sorting resources between different levels of nodes in the switching network system, and further improve stability of the switching network system. In addition, in the process in which the first node sends the target cell and the target moment to the lower-level node, the first node may update the target moment by using the system moment to obtain an updated target moment. Thereafter, the first node sends the target cell and the updated target moment to the lower-level node. The first node may update the target moment by using the system moment, and then send the target cell and the updated target moment to the lower-level node after obtaining the updated target moment. To be specific, that the target moment is a moment at which the first node sends the target cell is indicated to the lower-level node, to provide a specific implementation in which the lower-level node delays sending the target cell to a further lower-level node.

In a specific implementation, after the first node determines the sending delay threshold of the target cell in step S102, the first node may further receive second congestion feedback information from the lower-level node, where the second congestion feedback information is used to indicate a second congestion degree of the lower-level node. Thereafter, the first node updates the sending delay threshold based on the second congestion degree to obtain an updated sending delay threshold, where a magnitude of the second congestion degree is positively correlated with a size of the sending delay threshold. In addition, in an implementation process of step S104, when the difference between the system moment and the target moment is greater than the updated sending delay threshold, the first node sends the target cell to the lower-level node. In other words, after determining the sending delay threshold of the target cell, the first node may update, based on the second congestion degree reflected by the second congestion feedback information from the lower-level node, the sending delay threshold to obtain the updated sending delay threshold. The second congestion feedback information may be specifically used to feed back a congestion degree of the lower-level node in real time. Correspondingly, the first node sends the target cell to the lower-level node only when the difference between the system moment and the target moment is greater than the updated sending delay threshold. In other words, the first node can dynamically update the sending delay threshold based on the congestion degree fed back by the lower-level node in real time, so that the first node more precisely shares sorting load of the lower-level node, to further optimize sorting resources between different levels of nodes in the switching network system, and further improve stability of the switching network system.

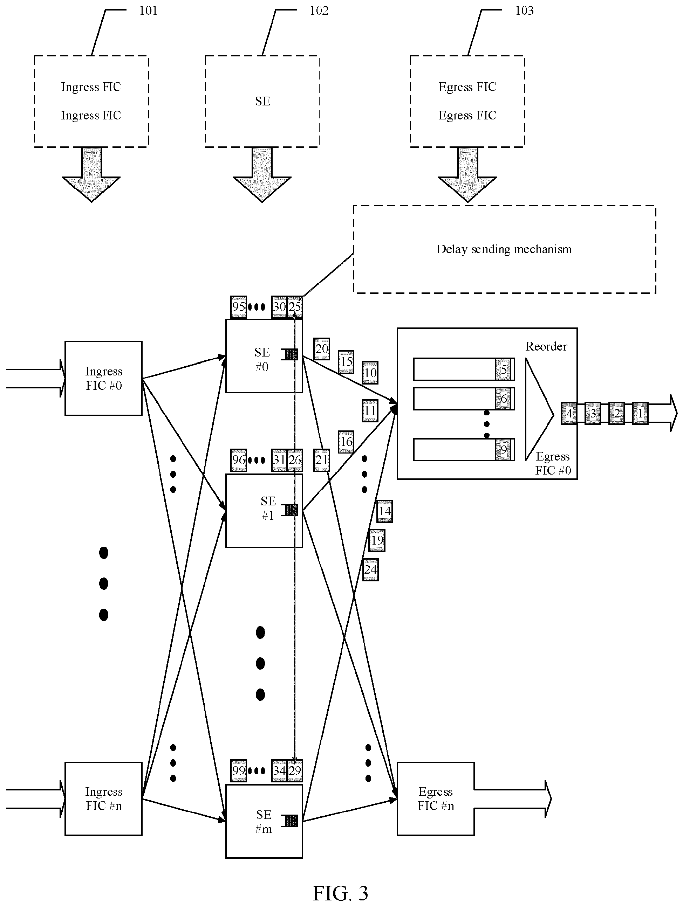

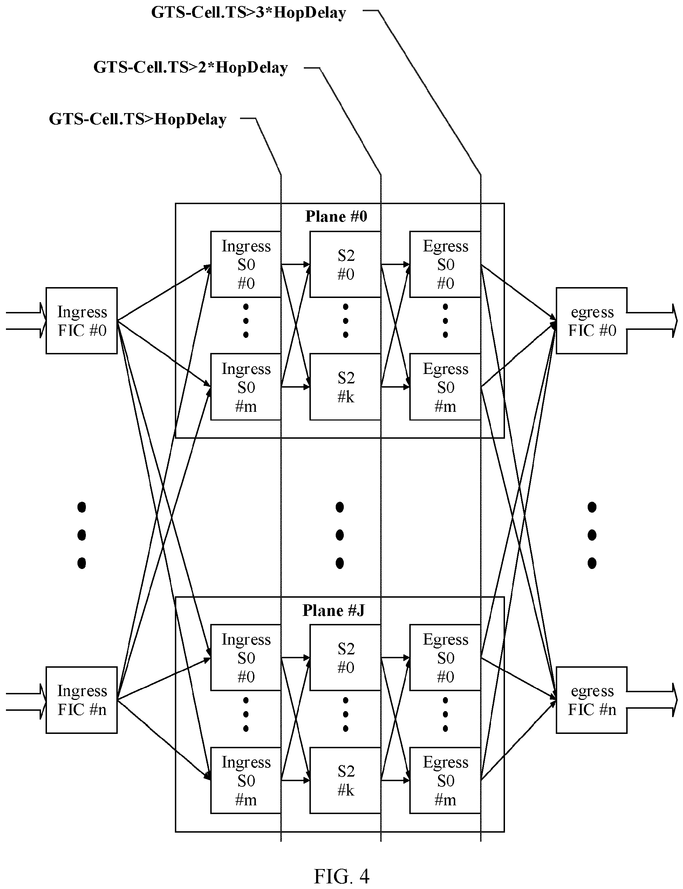

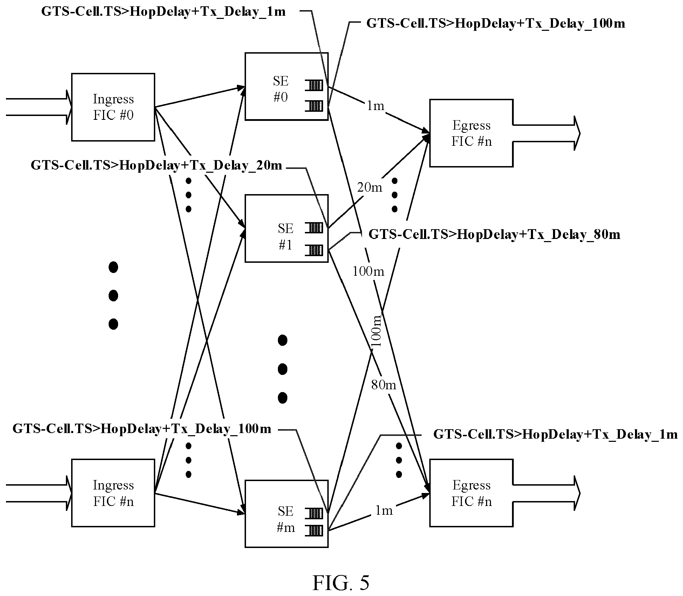

The foregoing delay mechanism shown in step S101 to step S104 in FIG. 2 is not limited to being used in a single-chassis system (including only a link on a TxToFic side), but may also be used in a multi-level multi-chassis system (including a link on a TxToSe side and a link on a TxToFic side). "TxToFic" refers to a link for transmission to a lower-level node being an FIC, and "TxToSe" refers to a link for transmission to a lower-level node being an SE. Details are as follows.
(1) As shown in FIG. 3, the delay mechanism is applied to the single-level single-chassis scenario. For example, any one or a combination of a plurality of SEs 102 is used as the first node and the egress FIC 103 is used as the lower-level node. To be specific, each SE receives a target cell that is sent by the ingress FIC and that carries a target moment (Cell.TS) (namely, step S101). A system moment of the SE is determined by aligning with the global time stamp (GTS) based on the global time stamp synchronization mechanism (namely, step S103). A sending delay threshold (TS_TX_THD) indicated by a TS is set (namely, step S102). Further, the target cell is sent to the egress FIC based on the system moment, the target moment, and the sending delay threshold (that is, in step S104, the target cell is sent when the difference between the system moment and the target moment is greater than the sending delay threshold).
(2) As shown in FIG. 4, the delay mechanism is applied to a multi-level SE scenario. For example, any one or a combination of a plurality of SEs at a same level is used as the first node (namely, an ingress SO, S2, and an egress S0), and the egress FIC is used as an egress node. As shown in step S102, the sending delay threshold (which is separately 1, 2, and 3) may be determined based on the quantity of hops between the first node and the initial node (namely, the ingress FIC). In addition, the target cell is sent to the egress FIC based on the system moment, the target moment, and the sending delay threshold.
   Specifically, for any ingress S0, the target cell is sent to the lower-level node when GTS minus Cell.TS is greater than HopDelay in the target cell. For any S2, the target cell is sent to the lower-level node when GTS minus Cell.TS is greater than 2×HopDelay in the target cell. For any egress S0, the target cell is sent to the lower-level node when GTS minus Cell.TS is greater than 3×HopDelay in the target cell.
(3) As shown in FIG. 5, based on the scenario shown in FIG. 3, as shown in step S102, the sending delay threshold may be determined based on a communication delay between the first node and the lower-level node (namely, the egress FIC). In addition, the target cell is sent to the egress FIC based on the system moment, the target moment, and the sending delay threshold.

Specifically, for an SE #0, a corresponding target cell is sent to the lower-level node when GTS minus Cell.TS is greater than HopDelay+Tx_Delay_1m in the target cell, and a corresponding target cell is sent to another lower-level node when GTS minus Cell.TS is greater than HopDelay+Tx_Delay_100m in the target cell. For an SE #1, a corresponding target cell is sent to the lower-level node when GTS minus Cell.TS is greater than HopDelay+Tx_Delay_20m in the target cell, and a corresponding target cell is sent to another lower-level node when GTS minus Cell.TS is greater than HopDelay+Tx_Delay_80m in the target cell. For an SE #m, a corresponding target cell is sent to the lower-level node when GTS minus Cell.TS is greater than HopDelay+Tx_Delay_100m in the target cell, and a corresponding target cell is sent to another lower-level node when GTS minus Cell.TS is greater than HopDelay+Tx_Delay_1m in the target cell.

Based on the foregoing delay sending mechanism, a difference between output times of the first nodes can be reduced. In this case, OQ resources of the first node can share sorting load corresponding to IQ resources of some lower-level nodes, to help optimize sorting resources of the FIC/SE (this helps reduce chip costs or ensure engineering implementation). Further, system expansibility can be improved, to support a more flexible networking structure (for example, link asymmetric extension).

In this embodiment, in a communication process of the switching network system, the first node in the switching network system obtains the to-be-sent target cell and the target moment, where the target moment is used to indicate the moment at which the target cell is processed. Then, the first node determines the sending delay threshold of the target cell. In addition, the first node obtains the current system moment in the first node. Thereafter, the first node sends the target cell to the lower-level node when the difference between the system moment and the target moment is greater than the sending delay threshold. The first node obtains the target cell and the target moment. In the process in which the first node sends the target cell to the lower-level node in the switching network system, the first node sends the target cell to the lower-level node only when the difference between the system moment and the target moment is greater than the sending delay threshold. In other words, the first node delays, by using the sending delay threshold, sending the target cell, so that an upper-level node in the switching network system shares sorting load of a lower-level node, to avoid an increased transmission delay caused by back pressure of the lower-level node, optimize sorting resources between different levels of nodes in the switching network system, and improve stability of the switching network system.

The foregoing describes the embodiments of this application from a method perspective. The following describes a communication apparatus in an embodiment of this application from a specific apparatus implementation perspective.

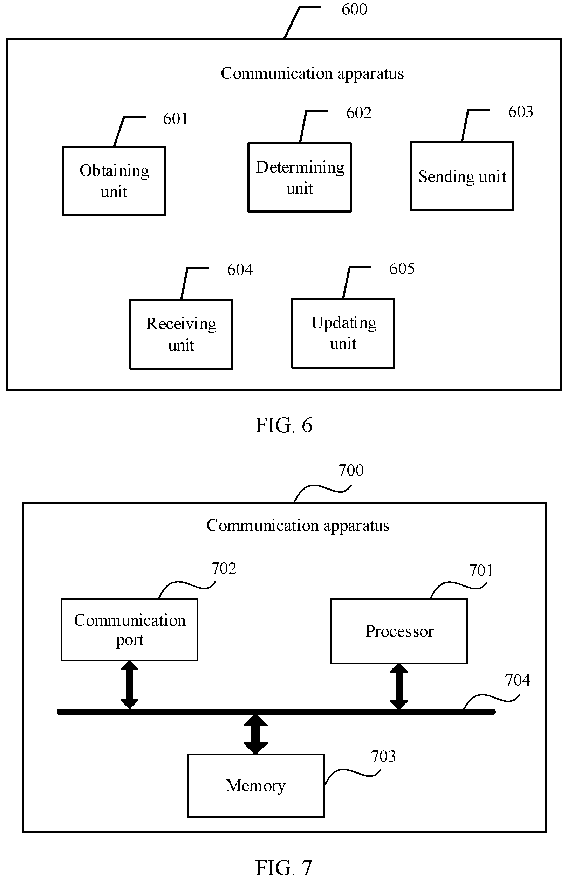

With reference to FIG. 6, an embodiment of this application provides a communication apparatus 600. Specifically, the communication apparatus 600 may be a first node. The communication apparatus 600 includes an obtaining unit 601, a determining unit 602, a sending unit 603, a receiving unit 604, and an updating unit 605.

The obtaining unit 601 is configured to obtain a to-be-sent target cell and a target moment, where the target moment is used to indicate a moment at which the target cell is processed.

The determining unit 602 is configured to determine a sending delay threshold of the target cell.

The obtaining unit 601 is further configured to obtain a current system moment in the first node.

The sending unit 603 is configured to send the target cell to a lower-level node when a difference between the system moment and the target moment is greater than the sending delay threshold.

In a specific implementation, the determining unit 602 is specifically configured to:
obtain a quantity of hops between the first node and an initial node in a switching network system; and
determine the sending delay threshold based on the quantity of hops, where a size of the quantity of hops is positively correlated with a size of the sending delay threshold.

In a specific implementation, the determining unit 602 is specifically configured to:
obtain a transmission delay between the first node and the lower-level node; and
determine the sending delay threshold based on the transmission delay, where a size of the transmission delay is positively correlated with a size of the sending delay threshold.

In a specific implementation, the determining unit 602 is specifically configured to:
receive first congestion feedback information from the lower-level node, where the first congestion feedback information is used to indicate a first congestion degree of the lower-level node; and
determine the sending delay threshold based on the first congestion degree, where a magnitude of the first congestion degree is positively correlated with a size of the sending delay threshold.

In a specific implementation, the apparatus further includes:
the receiving unit 604, configured to receive second congestion feedback information from the lower-level node, where the second congestion feedback information is used to indicate a second congestion degree of the lower-level node; and
the updating unit 605, configured to update the sending delay threshold based on the second congestion degree to obtain an updated sending delay threshold, where a magnitude of the second congestion degree is positively correlated with a size of the sending delay threshold.

The sending unit 603 is specifically configured to:
send the target cell to the lower-level node when the difference between the system moment and the target moment is greater than the updated sending delay threshold.

In a specific implementation, the obtaining unit 601 is specifically configured to:
obtain a to-be-sent packet; and
split the to-be-sent packet to obtain the target cell, where the target moment is used to indicate a generation moment of the target cell in the first node.

In a specific implementation, the obtaining unit 601 is specifically configured to:
receive the target cell and the target moment that are sent by an upper-level node, where the target moment is used to indicate a moment at which the upper-level node receives the target cell, or the target moment is used to indicate a moment at which the upper-level node sends the target cell, or the target moment is used to indicate a moment at which the initial node in the switching network system generates the target cell, or the target moment is used to indicate a moment at which the initial node in the switching network system sends the target cell.

In a specific implementation, the sending unit 603 is specifically configured to:
send the target cell and the target moment to the lower-level node.

In a specific implementation, the sending unit 603 is specifically configured to:
update the target moment by using the system moment to obtain an updated target moment; and
send the target cell and the updated target moment to the lower-level node.

It should be noted that, for content such as an information execution process of the unit of the communication apparatus 600, refer to the descriptions in the method embodiments in this application. Details are not described herein.

FIG. 7 is a schematic diagram of a possible logical structure of a communication apparatus 700 in the foregoing embodiments according to an embodiment of this application. The communication apparatus may be specifically the first node in the foregoing embodiments. The communication apparatus 700 may include but is not limited to a processor 701, a communication port 702, a memory 703, and a bus 704. In this embodiment of this application, the processor 701 is configured to control and process an action of the communication apparatus 700.

In addition, the processor 701 may be a central processing unit, a general-purpose processor, a digital signal processor, an application-specific integrated circuit, a field programmable gate array, another programmable logic device, a transistor logic device, a hardware component, or any combination thereof. The processor system may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that, the communication apparatus shown in FIG. 7 may be specifically configured to implement steps implemented by the terminal device in the method embodiments corresponding to FIG. 2 to FIG. 5, and implement technical effects corresponding to the first node. Details are not described herein.

An embodiment of this application further provides a computer-readable storage medium storing one or more computer-executable instructions. When the one or more computer-executable instructions are executed by a processor, the processor performs the method according to the possible implementation of the communication apparatus in the foregoing embodiment. The communication apparatus may be specifically the first node in the method embodiments corresponding to FIG. 2 to FIG. 5.

An embodiment of this application further provides a computer program product (or referred to as a computer program) storing one or more computers. When the computer program product is executed by a processor, the processor performs the method according to the possible implementation of the communication apparatus. The communication apparatus may be specifically the first node in the method embodiments corresponding to FIG. 2 to FIG. 5.

An embodiment of this application further provides a computer program product storing one or more computers. When the computer program product is executed by a processor, the processor performs the method according to the possible implementation of the communication apparatus. The communication apparatus may be specifically the first node in the method embodiments corresponding to FIG. 2 to FIG. 5.

An embodiment of this application further provides a chip system, and the chip system includes a processor, configured to support a communication apparatus in implementing the functions in the possible implementation of the communication apparatus. In a possible design, the chip system may further include a memory, and the memory is configured to store program instructions and data that are necessary for the communication apparatus. The chip system may include a chip, or may include a chip and another discrete device. The communication apparatus may be specifically the first node in the method embodiments corresponding to FIG. 2 to FIG. 5.

An embodiment of this application further provides a network system architecture. The network system architecture includes the foregoing communication apparatus, which may be specifically the first node in the method embodiments corresponding to FIG. 2 to FIG. 5; and a possible third node.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, applied to a first node (102) in a switching network system, wherein the method comprises:
obtaining (S101), by the first node (102), a to-be-sent target cell and a target moment, where the target moment is used to indicate a moment at which the target cell is processed by a node upstream of the first node (102) in the case where the first node (102) is an intermediate node in the switching network system, or the target moment is used to indicate a moment at which the target cell is generated by the first node (102) in the case where the first node (102) is an initial node in the switching network system;
determining (S102), by the first node (102), a sending delay threshold of the target cell; and
sending (S104), by the first node (102), the target cell to a lower-level node when a difference between a system moment in the first node and the target moment is greater than the sending delay threshold.

2. The method according to claim 1, wherein the determining, by the first node (102), a sending delay threshold of the target cell comprises:
obtaining, by the first node (102), a quantity of hops between the first node (102) and an initial node in the switching network system; and
determining, by the first node (102), the sending delay threshold based on the quantity of hops, wherein a size of the quantity of hops is positively correlated with a size of the sending delay threshold.

3. The method according to claim 1, wherein the determining, by the first node (102), a sending delay threshold of the target cell comprises:
obtaining, by the first node (102), a transmission delay between the first node (102) and the lower-level node; and
determining, by the first node (102), the sending delay threshold based on the transmission delay, wherein a size of the transmission delay is positively correlated with a size of the sending delay threshold.

4. The method according to claim 1, wherein the determining, by the first node (102), a sending delay threshold of the target cell comprises:
receiving, by the first node (102), first congestion feedback information from the lower-level node, wherein the first congestion feedback information is used to indicate a first congestion degree of the lower-level node; and
determining, by the first node (102), the sending delay threshold based on the first congestion degree, wherein a magnitude of the first congestion degree is positively correlated with a size of the sending delay threshold.

5. The method according to any one of claims 1 to 4, wherein after the determining, by the first node (102), a sending delay threshold of the target cell, the method further comprises:
receiving, by the first node (102), second congestion feedback information from the lower-level node, wherein the second congestion feedback information is used to indicate a second congestion degree of the lower-level node; and
updating, by the first node (102), the sending delay threshold based on the second congestion degree to obtain an updated sending delay threshold, wherein a magnitude of the second congestion degree is positively correlated with a size of the sending delay threshold; and
the sending, by the first node (102), the target cell to a lower-level node when a difference between a system moment and the target moment is greater than the sending delay threshold comprises:
sending, by the first node (102), the target cell to the lower-level node when the difference between the system moment and the target moment is greater than the updated sending delay threshold.

6. The method according to any one of claims 1 to 5, wherein the first node (102) is an initial node and the obtaining, by the first node (102), a to-be-sent target cell and a target moment comprises:
obtaining, by the first node (102), a to-be-sent packet; and
splitting, by the first node (102), the to-be-sent packet to obtain the target cell, wherein the target moment is used to indicate a generation moment of the target cell in the first node (102).

7. The method according to any one of claims 1 to 5, wherein the first node (102) is an intermediate node and the obtaining, by the first node (102), a to-be-sent target cell and a target moment comprises:
receiving, by the first node (102), the target cell and the target moment that are sent by an upper-level node, wherein the target moment is used to indicate a moment at which the upper-level node receives the target cell, or the target moment is used to indicate a moment at which the upper-level node sends the target cell, or the target moment is used to indicate a moment at which the initial node in the switching network system generates the target cell, or the target moment is used to indicate a moment at which the initial node in the switching network system sends the target cell.

8. A communication apparatus (600), wherein the communication apparatus is a first node (102) in a switching network system, and the first node (102) comprises:
an obtaining unit (601), configured to obtain a to-be-sent target cell and a target moment, wherein the target moment is used to indicate a moment at which the target cell is processed by a node upstream of the first node (102) in the case where the first node (102) is an intermediate node in the switching network system, or the target moment is used to indicate a moment at which the target cell is generated by the first node (102) in the case where the first node (102) is an initial node in the switching network system;
a determining unit (602), configured to determine a sending delay threshold of the target cell; and
a sending unit (603), configured to send the target cell to a lower-level node when a difference between a system moment in the first node and the target moment is greater than the sending delay threshold.

9. The apparatus (600) according to claim 8, wherein the determining unit (602) is configured to:
obtain a quantity of hops between the first node (102) and an initial node in the switching network system; and
determine the sending delay threshold based on the quantity of hops, wherein a size of the quantity of hops is positively correlated with a size of the sending delay threshold.

10. The apparatus (600) according to claim 8, wherein the determining unit (602) is configured to:
obtain a transmission delay between the first node (102) and the lower-level node; and
determine the sending delay threshold based on the transmission delay, wherein a size of the transmission delay is positively correlated with a size of the sending delay threshold.

11. The apparatus (600) according to claim 8, wherein the determining unit (602) is configured to:
receive first congestion feedback information from the lower-level node, wherein the first congestion feedback information is used to indicate a first congestion degree of the lower-level node; and
determine the sending delay threshold based on the first congestion degree, wherein a magnitude of the first congestion degree is positively correlated with a size of the sending delay threshold.

12. The apparatus (600) according to any one of claims 8 to 11, wherein the apparatus (600) further comprises:
a receiving unit (604), configured to receive second congestion feedback information from the lower-level node, wherein the second congestion feedback information is used to indicate a second congestion degree of the lower-level node; and
an updating unit (605), configured to update the sending delay threshold based on the second congestion degree to obtain an updated sending delay threshold, wherein a magnitude of the second congestion degree is positively correlated with a size of the sending delay threshold; and
the sending unit (603) is configured to:
send the target cell to the lower-level node when the difference between the system moment and the target moment is greater than the updated sending delay threshold.

13. The apparatus (600) according to any one of claims 8 to 12, wherein the first node (102) is an initial node and the obtaining unit (601) is configured to:
obtain a to-be-sent packet; and
split the to-be-sent packet to obtain the target cell, wherein the target moment is used to indicate a generation moment of the target cell in the first node (102).

14. The apparatus (600) according to any one of claims 8 to 12, wherein the first node (102) is an intermediate node and the obtaining unit (601) is configured to:
receive the target cell and the target moment that are sent by an upper-level node, wherein the target moment is used to indicate a moment at which the upper-level node receives the target cell, or the target moment is used to indicate a moment at which the upper-level node sends the target cell, or the target moment is used to indicate a moment at which the initial node in the switching network system generates the target cell, or the target moment is used to indicate a moment at which the initial node in the switching network system sends the target cell.

## Patentansprüche

1. Kommunikationsverfahren, das auf einen ersten Knoten (102) in einem Vermittlungsnetzwerksystem angewendet wird, wobei das Verfahren Folgendes umfasst:
Erlangen (S101), durch den ersten Knoten (102), einer zu sendenden Zielzelle und eines Zielzeitpunkts, wobei der Zielzeitpunkt verwendet wird, um einen Zeitpunkt anzugeben, zu dem die Zielzelle durch einen dem ersten Knoten (102) vorgelagerten Knoten verarbeitet wird, falls der erste Knoten (102) ein Zwischenknoten in dem Vermittlungsnetzwerksystem ist, oder der Zielzeitpunkt verwendet wird, um einen Zeitpunkt anzugeben, zu dem die Zielzelle durch den ersten Knoten (102) generiert wird, falls der erste Knoten (102) ein Anfangsknoten in dem Vermittlungsnetzwerksystem ist;
Bestimmen (S102), durch den ersten Knoten (102), eines Sendeverzögerungsschwellenwerts der Zielzelle; und
Senden (S104), durch den ersten Knoten (102), der Zielzelle an einen untergeordneten Knoten, wenn eine Differenz zwischen einem Systemzeitpunkt in dem ersten Knoten und dem Zielzeitpunkt größer als der Sendeverzögerungsschwellenwert ist.

2. Verfahren nach Anspruch 1, wobei das Bestimmen, durch den ersten Knoten (102), eines Sendeverzögerungsschwellenwerts der Zielzelle Folgendes umfasst:
Erlangen, durch den ersten Knoten (102), einer Anzahl von Hops zwischen dem ersten Knoten (102) und einem Anfangsknoten in dem Vermittlungsnetzwerksystem; und
Bestimmen, durch den ersten Knoten (102), des Sendeverzögerungsschwellenwerts basierend auf der Anzahl von Hops, wobei eine Größe der Anzahl von Hops positiv mit einer Größe des Sendeverzögerungsschwellenwerts korreliert ist.

3. Verfahren nach Anspruch 1, wobei das Bestimmen, durch den ersten Knoten (102), eines Sendeverzögerungsschwellenwerts der Zielzelle Folgendes umfasst:
Erlangen, durch den ersten Knoten (102), einer Übertragungsverzögerung zwischen dem ersten Knoten (102) und dem untergeordneten Knoten; und
Bestimmen, durch den ersten Knoten (102), des Sendeverzögerungsschwellenwerts basierend auf der Übertragungsverzögerung, wobei eine Größe der Übertragungsverzögerung positiv mit einer Größe des Sendeverzögerungsschwellenwerts korreliert ist.

4. Verfahren nach Anspruch 1, wobei das Bestimmen, durch den ersten Knoten (102), eines Sendeverzögerungsschwellenwerts der Zielzelle Folgendes umfasst:
Empfangen, durch den ersten Knoten (102), von ersten Überlastungsrückkopplungsinformationen von dem untergeordneten Knoten, wobei die ersten Überlastungsrückkopplungsinformationen verwendet werden, um einen ersten Überlastungsgrad des untergeordneten Knotens anzugeben; und
Bestimmen, durch den ersten Knoten (102), des Sendeverzögerungsschwellenwerts basierend auf dem ersten Überlastungsgrad, wobei ein Ausmaß des ersten Überlastungsgrades positiv mit einer Größe des Sendeverzögerungsschwellenwerts korreliert ist.

5. Verfahren nach einem der Ansprüche 1 bis 4, wobei das Verfahren nach dem Bestimmen, durch den ersten Knoten (102), eines Sendeverzögerungsschwellenwerts der Zielzelle ferner Folgendes umfasst:
Empfangen, durch den ersten Knoten (102), von zweiten Überlastungsrückkopplungsinformationen von dem untergeordneten Knoten, wobei die zweiten Überlastungsrückkopplungsinformationen verwendet werden, um einen zweiten Überlastungsgrad des untergeordneten Knotens anzugeben; und
Aktualisieren, durch den ersten Knoten (102), des Sendeverzögerungsschwellenwerts basierend auf dem zweiten Überlastungsgrad, um einen aktualisierten Sendeverzögerungsschwellenwert zu erlangen, wobei ein Ausmaß des zweiten Überlastungsgrades positiv mit einer Größe des Sendeverzögerungsschwellenwerts korreliert ist; und
das Senden, durch den ersten Knoten (102), der Zielzelle an einen untergeordneten Knoten, wenn eine Differenz zwischen einem Systemzeitpunkt und dem Zielzeitpunkt größer als der Sendeverzögerungsschwellenwert ist, Folgendes umfasst:
Senden, durch den ersten Knoten (102), der Zielzelle an den untergeordneten Knoten, wenn die Differenz zwischen dem Systemzeitpunkt und dem Zielzeitpunkt größer als der aktualisierte Sendeverzögerungsschwellenwert ist.

6. Verfahren nach einem der Ansprüche 1 bis 5, wobei der erste Knoten (102) ein Anfangsknoten ist und das Erlangen, durch den ersten Knoten (102), einer zu sendenden Zielzelle und eines Zielzeitpunkts Folgendes umfasst:
Erlangen, durch den ersten Knoten (102), eines zu sendenden Pakets; und
Aufteilen, durch den ersten Knoten (102), des zu sendenden Pakets, um die Zielzelle zu erlangen, wobei der Zielzeitpunkt verwendet wird, um einen Generierungszeitpunkt der Zielzelle in dem ersten Knoten (102) anzugeben.

7. Verfahren nach einem der Ansprüche 1 bis 5, wobei der erste Knoten (102) ein Zwischenknoten ist und das Erlangen, durch den ersten Knoten (102), einer zu sendenden Zielzelle und eines Zielzeitpunkts Folgendes umfasst:
Empfangen, durch den ersten Knoten (102), der Zielzelle und des Zielzeitpunkts, die durch einen übergeordneten Knoten gesendet werden, wobei der Zielzeitpunkt verwendet wird, um einen Zeitpunkt anzugeben, zu dem der übergeordnete Knoten die Zielzelle empfängt, oder der Zielzeitpunkt verwendet wird, um einen Zeitpunkt anzugeben, zu dem der übergeordnete Knoten die Zielzelle sendet, oder der Zielzeitpunkt verwendet wird, um einen Zeitpunkt anzugeben, zu dem der Anfangsknoten in dem Vermittlungsnetzwerksystem die Zielzelle generiert, oder der Zielzeitpunkt verwendet wird, um einen Zeitpunkt anzugeben, zu dem der Anfangsknoten in dem Vermittlungsnetzwerksystem die Zielzelle sendet.

8. Kommunikationsvorrichtung (600), wobei die Kommunikationsvorrichtung ein erster Knoten (102) in einem Vermittlungsnetzwerksystem ist und der erste Knoten (102) Folgendes umfasst:
eine Erlangungseinheit (601), die dazu konfiguriert ist, eine zu sendende Zielzelle und einen Zielzeitpunkt zu erlangen, wobei der Zielzeitpunkt verwendet wird, um einen Zeitpunkt anzugeben, zu dem die Zielzelle durch einen dem ersten Knoten (102) vorgelagerten Knoten verarbeitet wird, falls der erste Knoten (102) ein Zwischenknoten in dem Vermittlungsnetzwerksystem ist, oder der Zielzeitpunkt verwendet wird, um einen Zeitpunkt anzugeben, zu dem die Zielzelle durch den ersten Knoten (102) generiert wird, falls der erste Knoten (102) ein Anfangsknoten in dem Vermittlungsnetzwerksystem ist;
eine Bestimmungseinheit (602), die dazu konfiguriert ist, einen Sendeverzögerungsschwellenwert der Zielzelle zu bestimmen; und eine Sendeeinheit (603), die dazu konfiguriert ist, die Zielzelle an einen untergeordneten Knoten zu senden, wenn eine Differenz zwischen einem Systemzeitpunkt in dem ersten Knoten und dem Zielzeitpunkt größer als der Sendeverzögerungsschwellenwert ist.

9. Vorrichtung (600) nach Anspruch 8, wobei die Bestimmungseinheit (602) zu Folgendem konfiguriert ist:
Erlangen einer Anzahl von Hops zwischen dem ersten Knoten (102) und einem Anfangsknoten in dem Vermittlungsnetzwerksystem; und Bestimmen des Sendeverzögerungsschwellenwerts basierend auf der Anzahl von Hops, wobei eine Größe der Anzahl von Hops positiv mit einer Größe des Sendeverzögerungsschwellenwerts korreliert ist.

10. Vorrichtung (600) nach Anspruch 8, wobei die Bestimmungseinheit (602) ferner zu Folgendem konfiguriert ist:
Erlangen einer Übertragungsverzögerung zwischen dem ersten Knoten (102) und dem untergeordneten Knoten; und
Bestimmen des Sendeverzögerungsschwellenwerts basierend auf der Übertragungsverzögerung, wobei eine Größe der Übertragungsverzögerung positiv mit einer Größe des Sendeverzögerungsschwellenwerts korreliert ist.

11. Vorrichtung (600) nach Anspruch 8, wobei die Bestimmungseinheit (602) ferner zu Folgendem konfiguriert ist:
Empfangen von ersten Überlastungsrückkopplungsinformationen von dem untergeordneten Knoten, wobei die ersten Überlastungsrückkopplungsinformationen verwendet werden, um einen ersten Überlastungsgrad des untergeordneten Knotens anzugeben; und
Bestimmen des Sendeverzögerungsschwellenwerts basierend auf dem ersten Überlastungsgrad, wobei ein Ausmaß des ersten Überlastungsgrades positiv mit einer Größe des Sendeverzögerungsschwellenwerts korreliert ist.

12. Vorrichtung (600) nach einem der Ansprüche 8 bis 11, wobei die Vorrichtung (600) ferner Folgendes umfasst:
eine Empfangseinheit (604), die dazu konfiguriert ist, zweite Überlastungsrückkopplungsinformationen von dem untergeordneten Knoten zu empfangen, wobei die zweiten Überlastungsrückkopplungsinformationen verwendet werden, um einen zweiten Überlastungsgrad des untergeordneten Knotens anzugeben; und
eine Aktualisierungseinheit (605), die dazu konfiguriert ist, den Sendeverzögerungsschwellenwert basierend auf dem zweiten Überlastungsgrad zu aktualisieren, um einen aktualisierten Sendeverzögerungsschwellenwert zu erlangen, wobei ein Ausmaß des zweiten Überlastungsgrades positiv mit einer Größe des Sendeverzögerungsschwellenwerts korreliert ist; und
die Sendeeinheit (603) ferner zu Folgendem konfiguriert:
Senden der Zielzelle an den untergeordneten Knoten, wenn die Differenz zwischen dem Systemzeitpunkt und dem Zielzeitpunkt größer als der aktualisierte Sendeverzögerungsschwellenwert ist.

13. Vorrichtung (600) nach einem der Ansprüche 8 bis 12, wobei der erste Knoten (102) ein Anfangsknoten ist und die Erlangungseinheit (601) zu Folgendem konfiguriert ist:
Erlangen eines zu sendenden Pakets; und
Aufteilen des zu sendenden Pakets, um die Zielzelle zu erlangen, wobei der Zielzeitpunkt verwendet wird, um einen Generierungszeitpunkt der Zielzelle in dem ersten Knoten (102) anzugeben.

14. Vorrichtung (600) nach einem der Ansprüche 8 bis 12, wobei der erste Knoten (102) ein Zwischenknoten ist und die Erlangungseinheit (601) zu Folgendem konfiguriert ist:
Empfangen der Zielzelle und des Zielzeitpunkts, die durch einen übergeordneten Knoten gesendet werden, wobei der Zielzeitpunkt verwendet wird, um einen Zeitpunkt anzugeben, zu dem der übergeordnete Knoten die Zielzelle empfängt, oder der Zielzeitpunkt verwendet wird, um einen Zeitpunkt anzugeben, zu dem der übergeordnete Knoten die Zielzelle sendet, oder der Zielzeitpunkt verwendet wird, um einen Zeitpunkt anzugeben, zu dem der Anfangsknoten in dem Vermittlungsnetzwerksystem die Zielzelle generiert, oder der Zielzeitpunkt verwendet wird, um einen Zeitpunkt anzugeben, zu dem der Anfangsknoten in dem Vermittlungsnetzwerksystem die Zielzelle sendet.

## Revendications

1. Procédé de communication appliqué à un premier nœud (102) dans un système de réseau de commutation, dans lequel le procédé comprend :
l'obtention (S101), par le premier nœud (102), d'une cellule cible à envoyer et d'un moment cible, où le moment cible est utilisé pour indiquer un moment où la cellule cible est traitée par un nœud en amont du premier nœud (102) dans le cas où le premier nœud (102) est un nœud intermédiaire dans le système de réseau de commutation, ou le moment cible est utilisé pour indiquer un moment où la cellule cible est générée par le premier nœud (102) dans le cas où le premier nœud (102) est un nœud initial dans le système de réseau de commutation ;
la détermination (S102), par le premier nœud (102), d'un seuil de délai d'envoi de la cellule cible ; et
l'envoi (S104), par le premier nœud (102), de la cellule cible à un nœud de niveau inférieur lorsqu'une différence entre un moment de système dans le premier nœud et le moment cible est supérieure au seuil de délai d'envoi.

2. Procédé selon la revendication 1, dans lequel la détermination, par le premier nœud (102), d'un seuil de délai d'envoi de la cellule cible comprend :
l'obtention, par le premier nœud (102), d'une quantité de sauts entre le premier nœud (102) et un nœud initial dans le système de réseau de commutation ; et
la détermination, par le premier nœud (102), du seuil de délai d'envoi sur la base de la quantité de sauts, dans lequel la taille de la quantité de sauts est positivement corrélée avec la taille du seuil de délai d'envoi.

3. Procédé selon la revendication 1, dans lequel la détermination, par le premier nœud (102), d'un seuil de délai d'envoi de la cellule cible comprend :
l'obtention, par le premier nœud (102), d'un délai de transmission entre le premier nœud (102) et le nœud de niveau inférieur ; et
la détermination, par le premier nœud (102), du seuil de délai d'envoi sur la base du délai de transmission, dans lequel une taille du délai de transmission est positivement corrélée avec une taille du seuil de délai d'envoi.

4. Procédé selon la revendication 1, dans lequel la détermination, par le premier nœud (102), d'un seuil de délai d'envoi de la cellule cible comprend :
la réception, par le premier nœud (102), des premières informations de retour d'information sur la congestion provenant du nœud de niveau inférieur, dans lequel les premières informations de retour d'information sur la congestion sont utilisées pour indiquer un premier degré de congestion du nœud de niveau inférieur ; et
la détermination, par le premier nœud (102), du seuil de délai d'envoi sur la base du premier degré de congestion, dans lequel l'ampleur du premier degré de congestion est positivement corrélée avec la taille du seuil de délai d'envoi.

5. Procédé selon l'une quelconque des revendications 1 à 4, dans lequel, après la détermination, par le premier nœud (102), d'un seuil de délai d'envoi de la cellule cible, le procédé comprend également :
la réception, par le premier nœud (102), des secondes informations de retour d'information sur la congestion provenant du nœud de niveau inférieur, dans lequel les secondes informations de retour d'information sur la congestion sont utilisées pour indiquer un second degré de congestion du nœud de niveau inférieur ; et
la mise à jour, par le premier nœud (102), du seuil de délai d'envoi sur la base du second degré de congestion afin d'obtenir un seuil de délai d'envoi mis à jour, dans lequel l'amplitude du second degré de congestion est positivement corrélée à la taille du seuil de délai d'envoi ; et
l'envoi, par le premier nœud (102), de la cellule cible à un nœud de niveau inférieur lorsqu'une différence entre un moment de système et le moment cible est supérieure au seuil de délai d'envoi comprend :
l'envoi, par le premier nœud (102), de la cellule cible à un nœud de niveau inférieur lorsqu'une différence entre un moment de système et le moment cible est supérieure au seuil de délai d'envoi mis à jour.

6. Procédé selon l'une quelconque des revendications 1 à 5, dans lequel le premier nœud (102) est un nœud initial et l'obtention, par le premier nœud (102), d'une cellule cible à envoyer et d'un moment cible comprend :
l'obtention, par le premier nœud (102), d'un paquet à envoyer ; et
la division, par le premier nœud (102), du paquet à envoyer pour obtenir la cellule cible, dans lequel le moment cible est utilisé pour indiquer un moment de génération de la cellule cible dans le premier nœud (102).

7. Procédé selon l'une quelconque des revendications 1 à 5, dans lequel le premier nœud (102) est un nœud intermédiaire et l'obtention, par le premier nœud (102), d'une cellule cible à envoyer et d'un moment cible comprend :
la réception, par le premier nœud (102), de la cellule cible et du moment cible qui sont envoyés par un nœud de niveau supérieur, dans lequel le moment cible est utilisé pour indiquer un moment où le nœud de niveau supérieur reçoit la cellule cible, ou le moment cible est utilisé pour indiquer un moment où le nœud de niveau supérieur envoie la cellule cible, ou le moment cible est utilisé pour indiquer un moment où le nœud initial du système de réseau de commutation génère la cellule cible, ou le moment cible est utilisé pour indiquer un moment où le nœud initial du système de réseau de commutation envoie la cellule cible.

8. Appareil de communication (600), dans lequel l'appareil de communication est un premier nœud (102) dans un système de réseau de commutation, et le premier nœud (102) comprend :
une unité d'obtention (601), configurée pour obtenir une cellule cible à envoyer et un moment cible, dans lequel le moment cible est utilisé pour indiquer un moment où la cellule cible est traitée par un nœud en amont du premier nœud (102) dans le cas où le premier nœud (102) est un nœud intermédiaire dans le système de réseau de commutation, ou le moment cible est utilisé pour indiquer un moment où la cellule cible est générée par le premier nœud (102) dans le cas où le premier nœud (102) est un nœud initial dans le système de réseau de commutation ;
une unité de détermination (602), configurée pour déterminer un seuil de délai d'envoi de la cellule cible ; et
une unité d'envoi (603), configurée pour envoyer la cellule cible à un nœud de niveau inférieur lorsqu'une différence entre un moment de système dans le premier nœud et le moment cible est supérieure au seuil de délai d'envoi.

9. Appareil (600) selon la revendication 8, dans lequel l'unité de détermination (602) est configurée pour :
obtenir une quantité de sauts entre le premier nœud (102) et un nœud initial dans le système de réseau de commutation ; et déterminer le seuil de délai d'envoi sur la base de la quantité de sauts, dans lequel la taille de la quantité de sauts est positivement corrélée avec la taille du seuil de délai d'envoi.

10. Appareil (600) selon la revendication 8, dans lequel l'unité de détermination (602) est configurée pour :
obtenir un délai de transmission entre le premier nœud (102) et le nœud de niveau inférieur ; et
déterminer le seuil de délai d'envoi sur la base du délai de transmission, dans lequel une taille du délai de transmission est positivement corrélée avec une taille du seuil de délai d'envoi.

11. Appareil (600) selon la revendication 8, dans lequel l'unité de détermination (602) est configurée pour :
recevoir des premières informations de retour d'information sur la congestion provenant du nœud de niveau inférieur, dans lequel les premières informations de retour d'information sur la congestion sont utilisées pour indiquer un premier degré de congestion du nœud de niveau inférieur ; et
déterminer le seuil de délai d'envoi sur la base du premier degré de congestion, dans lequel l'ampleur du premier degré de congestion est positivement corrélée avec la taille du seuil de délai d'envoi.

12. Appareil (600) selon l'une quelconque des revendications 8 à 11, dans lequel l'appareil (600) comprend également :
l'unité de réception (604), configurée pour recevoir des secondes informations de retour d'information sur la congestion provenant du nœud de niveau inférieur, dans lequel les secondes informations de retour d'information sur la congestion sont utilisées pour indiquer un second degré de congestion du nœud de niveau inférieur ; et
une unité de mise à jour (605) configurée pour mettre à jour le seuil de délai d'envoi sur la base du second degré de congestion afin d'obtenir un seuil de délai d'envoi mis à jour, dans lequel l'amplitude du second degré de congestion est positivement corrélée à la taille du seuil de délai d'envoi ; et
l'unité d'envoi (603) est configurée pour :
envoyer la cellule cible à un nœud de niveau inférieur lorsqu'une différence entre un moment de système et le moment cible est supérieure au seuil de délai d'envoi mis à jour.

13. Appareil (600) selon l'une quelconque des revendications 8 à 12, dans lequel le premier nœud (102) est un nœud initial et l'unité d'obtention (601) est configurée pour :
obtenir un paquet à envoyer ; et
diviser le paquet à envoyer pour obtenir la cellule cible, dans lequel le moment cible est utilisé pour indiquer un moment de génération de la cellule cible dans le premier nœud (102).

14. Appareil (600) selon l'une quelconque des revendications 8 à 12, dans lequel le premier nœud (102) est un nœud intermédiaire et l'unité d'obtention (601) est configurée pour :
recevoir la cellule cible et le moment cible qui sont envoyés par un nœud de niveau supérieur, dans lequel le moment cible est utilisé pour indiquer un moment où le nœud de niveau supérieur reçoit la cellule cible, ou le moment cible est utilisé pour indiquer un moment où le nœud de niveau supérieur envoie la cellule cible, ou le moment cible est utilisé pour indiquer un moment où le nœud initial du système de réseau de commutation génère la cellule cible, ou le moment cible est utilisé pour indiquer un moment où le nœud initial du système de réseau de commutation envoie la cellule cible.
